# EUROPEAN PATENT SPECIFICATION

(11) **EP 3 544 406 B1**
(45) Date of publication and mention of the grant of the patent: **21.10.2020**
(21) Application number: 17720428.6
(22) Date of filing: 24.04.2017
(51) Int. Cl.: A01C 7/02, A01C 15/02

(54) **SHUTTER ASSEMBLY FOR LAWN SPREADER ASSEMBLY**
VERSCHLUSSANORDNUNG FÜR EINE RASENVERTEILERANORDNUNG
ENSEMBLE OBTURATEUR POUR ENSEMBLE ÉPANDEUR DE GAZON

(30) Priority: 23.11.2016 DE 102016013942
(43) Date of publication of application: 02.10.2019
(73) Proprietor: Husqvarna AB, 561 82 Huskvarna (SE)
(72) Inventor: BROBEIL, Achim, 89160 Dornstadt (DE); MOCK, Axel, 89134 Blaustein (DE); SCHNEIDER, Regina, 89250 Senden (DE)
(74) Representative: Finkele, Rolf
(86) International application number: PCT/EP2017/059660
(87) International publication number: WO 2018/095585

(56) References cited:
- EP-A1- 2 311 303
- DE-A1- 2 605 512
- GB-A- 848 718
- GB-A- 1 280 766
- GB-A- 2 175 482

## Description

### TECHNICAL FIELD

The present invention relates to spreader assemblies, and more particularly to a shutter assembly for a lawn spreader assembly.

### BACKGROUND

Spreader devices are generally used for spreading and distributing materials, including, but not limited to, fertilizer and seeds on surface like, lawn, farm land etc. The spreader device typically includes a roller disposed inside a container carrying the material, a feed opening provided in the container for distributing material onto the surface and a shutter device at a bottom portion of the feed opening. The shutter device is operated manually by an operator for controlling operation of opening and closing of the feed opening. The roller of the spreader device is connected to wheels of the spreader device and rotates with the rotation of the wheels. Further, the roller selectively allows the material to reach a passage leading to the feed opening. The passage is defined between a container inner wall and peripheral edges of the roller. Since the spreader device may be employed for spreading material having particles with varying sizes and hardness, the particles often get stuck at the passage, and between the shutter device and the feed opening. This may cause restrict flow of material through the feed opening. Further, the material also often gets damaged when the material gets jammed in between the shutter device and the feed opening. Such jamming of the material between the feed opening and the shutter device is undesired as it may lead to less flow or over flow of material to the surface.

The U.S. Patent 2,835,420 (hereinafter referred to as the patent '420) discloses a shutter bar for fertilizer spreader. The fertilizer spreader includes a hopper of generally trough shape in vertical section, the bottom of which is rounded to accommodate the rotating agitators operating in close proximity thereto. Agitators are mounted on and spaced along shafts and supported within hopper on an inboard bearing and outboard bearings. Shaft extends through bearing and is secured to a wheel by which the spreader may be rolled over the ground.

The British publication document GB 3 175 482 A shows a convetional spreader comprising a handle extending upwardly from the hopper. A stopper is cooperating with the shutter assembly. Thereby the stopper actuating mechanism is adapted to selectively move the shutter assembly on the hopper.

To avoid material entering the space between the hopper and the shutter the British publication document GB 1 280 766 A describes a shutter assembly with a flat resilient member mounted thereon. By this a quite tight alignment between shutter and hopper is achieved. This tight alignment is suitable to further minimize the risk of material entering the space between the hopper and the shutter. Finally, another spreader with wheels and with a shutter assembly according to the preamble of claim 1 is known from GB 2 175 482.

Therefore, in light of the foregoing, there is a need for an improved spreader device which can overcome one or more problems stated above.

### SUMMARY

In view of the above, it is an objective of the present invention to solve or at least reduce the problems discussed above. The objective is achieved with a spreader assembly and a shutter assembly of the spreader assembly according to claims 1 and 5. The spreader assembly includes a hopper adapted to contain a material. The hopper includes a feed opening for selectively discharging the material. The spreader assembly further includes a pair of wheels connected to the hopper. The spreader assembly further includes a roller rotatably connected to the pair of wheels. The spreader assembly further includes a shutter assembly movably disposed on the hopper. The shutter assembly includes a body portion having at least one longitudinal recess, and a resilient member disposed at the longitudinal recess of the body portion, the resilient member adapted to selectively slide on the hopper to close the feed opening.

According to an aspect of the present invention, the resilient member is fixedly connected at the longitudinal recess of the body portion.

According to the present invention, the resilient member includes one or more fins composed of a resilient material.

According to the present invention, the one or more fins define a plurality of grooves in one of a "V" shape and a "U" shape.

According to an aspect of the present invention, the shutter assembly is manufactured by a multi-component molding process.

According to an aspect of the present invention, the shutter assembly is manufactured by two component molding process.

According to an aspect of the present invention, the spreader assembly includes a handle extending upwardly from the hopper. The spreader assembly further includes a stopper actuating mechanism disposed on the handle and in connection with the shutter assembly. The stopper actuating mechanism is adapted to selectively move the shutter assembly on the hopper.

According to the present invention, the shutter assembly for a spreader assembly includes a hopper adapted to contain a material. The hopper includes a feed opening for selectively discharging the material. The spreader assembly further includes a pair of wheels connected to the hopper. The spreader assembly further includes a roller rotatably connected to the pair of wheels. The spreader assembly further includes a shutter assembly movably disposed on the hopper. The shutter assembly includes a body portion having at least one longitudinal recess and a resilient member disposed at the longitudinal recess of the body portion. The resilient member is adapted to selectively slide on the hopper to close the feed opening.

According to an aspect of the present invention, the resilient member of the shutter assembly comes in contact with the of material or particles, and the resilient member includes one or more fins composed of a resilient material, any likelihood of damage thereto from the shutter assembly is reduced.

According to an aspect of the present invention, the shutter assembly disclosed in the present invention is free from trickling effect after closing the feed opening of the hopper of the spreader assembly.

### BRIEF DESCRIPTION OF THE DRAWINGS

The invention will be described in more detail with reference to the enclosed drawings, wherein:
FIG. **1** shows a perspective view of a spreader assembly, according to an embodiment of the present invention;
FIG. **2** shows a sectional view of the spreader assembly shown in FIG. **1** along an axis **X-X',** according to an embodiment of the present invention;
FIG. **3** shows a magnified view of a portion **"A"** shown in FIG. **2****,** according to an embodiment of the present invention;
FIG. **4** shows a perspective view of a shutter assembly, according to an embodiment of the present invention;
FIG. **5** shows a sectional view of the shutter assembly shown in FIG. **4** along an axis **B-B'**, according to an embodiment of the present invention;
FIG. **6** shows a side view of the shutter assembly shown in FIG. **5****,** according to an embodiment of the present invention;
FIG. **7** shows a magnified view of a portion of the spreader assembly in which a feed opening of a hopper is closed by the shutter assembly, according to an embodiment of the present invention; and
FIG. **8** shows a magnified view of a portion of the spreader assembly in which the feed opening of the hopper is opened by the shutter assembly, according to an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention as defined in the appended claims to those skilled in the art. In the drawings, like numbers refer to like elements. Wherever possible, the same reference numbers will be used throughout the drawings to refer to the same or the like parts.

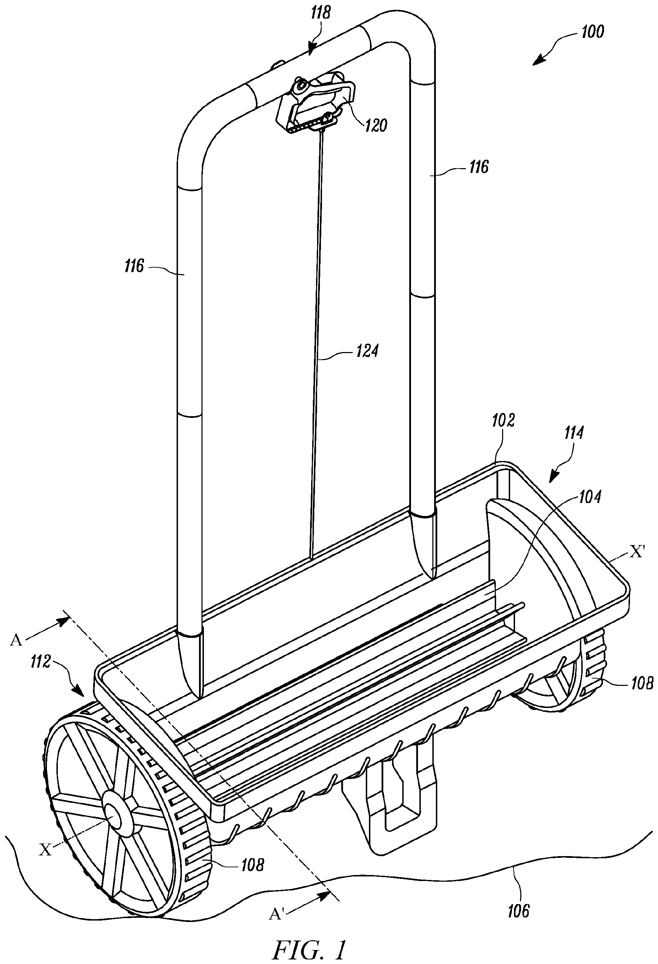

FIG. 1 illustrates a perspective view of a spreader assembly **100,** according to an embodiment of the present invention. The spreader assembly **100** may be a farm or a garden implement used for spreading and distributing a material or mixture of materials. The material for spreading and distributing may include, but not limited to, fertilizer, seeds, sand, chemical, pesticide and ice melt. The material may be in a granular form or pellet form, having predetermined sizes. The spreader assembly **100** includes a hopper **102** adapted to contain the material or mixture of materials (not shown). In an example, the hopper **102** is provided in a cup shape or cylindrical shape or any other shape known in the art, to carry the material during operation of the spreader assembly **100.**

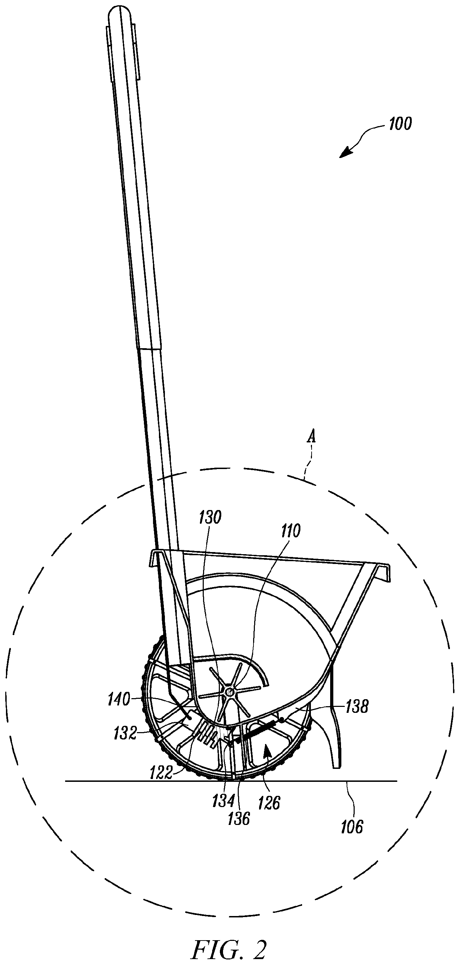

The hopper **102** is further adapted to accommodate at least one roller **104** inside the hopper **102.** In the embodiment shown in the FIG. **1****,** the hopper **102** includes one roller **104.** However, the hopper **102** can be adapted to accommodate more than one roller **104,** based on design and functional requirements of the spreader assembly **100.** It is to be understood that the number of roller **104** described in the present invention is not meant to be limiting the scope of the present invention. The hopper **102** may be adapted to accommodate more than one roller **104** for carrying out the spreading and distributing operations on a surface **106.** The roller **104** may be arranged within the hopper **102,** about an axis **X-X'.** The roller **104** is rotatable along with the rotation of a pair of wheels **108,** since the pair of wheels **108** is connected to the roller **104** through a shaft **110** (shown in FIG. **2**) for transferring rotational energy from the pair of wheels **108** to the roller **104.** In an example, the pair of wheels **108** is arranged outside a first side surface **112** and a second side surface **114** opposite to the first side surface **112** of the hopper **102.**

The hopper **102** is further provided with a handle **116** extending upwardly and vertically from the hopper **102.** The handle **116** facilitates in holding and operating the spreader assembly **100.** In an example, the handle **116** may be a tubular member connected to the hopper **102.** In another example, the tubular member may be, but not limited to, a telescopic tube, a cylindrical tube. In the illustrated figure, the handle **116** includes a holding portion **118** and a stopper actuating mechanism **120** connected to the holding portion **118** for controlling operations of a shutter assembly **122** (shown in FIG. **2**). The stopper actuating mechanism **120** is connected to the shutter assembly **122** through a control cable **124.**

FIG. **2** illustrates a sectional view of the spreader assembly **100** shown in the FIG. **1** along an axis **A-A'** according to an embodiment of the present invention. The hopper **102** includes the first side surface **112** (shown in FIG. **1**) and the second side surface **114** (shown in FIG. **1**) opposite to the first side surface **112,** a bottom surface **126** and an open top surface **128** for receiving the material. The bottom surface **126** of the hopper **102** is provided with a feed opening **130** along length of the hopper **102.** The feed opening **130** is adapted to selectively discharge the material from the hopper **102** to the surface **106** by controlling rotation of the roller **104** in the hopper **102.** The shutter assembly **122** is movably disposed on the hopper **102.** Specifically, the shutter assembly **122** is movably disposed on the bottom surface **126** of the hopper **102.**

The stopper actuating mechanism **120** (shown in FIG. **1**) is connected to the shutter assembly **122** through the control cable **124** at a first end **132** of the shutter assembly **122.** Further, a second end **134** of the shutter assembly **122** is detachably connected to a coil spring **136.** The coil spring **136** can be fixedly connected to a first end **138** of the bottom surface **126** of the hopper **102.** The stopper actuating mechanism **120** is operated for activating sliding movement of the shutter assembly **122** on an outer surface **140** of the bottom surface **126** of the hopper **102.** The sliding movement of the shutter assembly **122** enables the feed opening **130** to be selectively opened or closed. In the illustrated embodiment, the shutter assembly **122** is slidingly moved on the outer surface **140** of the bottom surface **126** surpassing the feed opening **130,** to close the feed opening **130.** Thus, the feed opening **130** may be closed and opened by the shutter assembly **122.** In an example, when an operator intends to refill the material in the hopper **102** or hold the operation of spreading of the material, firstly, the feed opening **130** needs to be closed by the shutter assembly **122** and secondly, the spreader assembly **100** needs to be stopped from movement. Thus, the roller **104** in the hopper **102** is stopped from rotation.

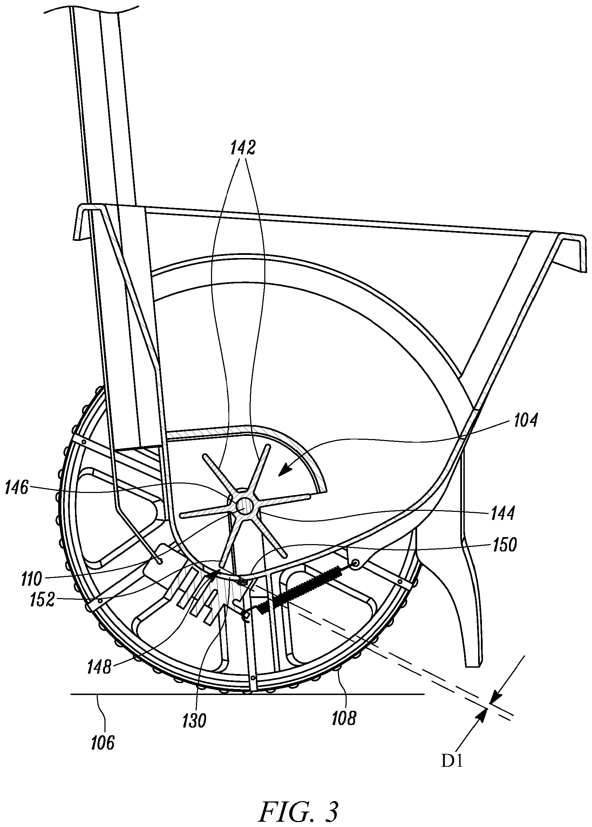

FIG. **3** illustrates a magnified view of a portion **"A"** shown in FIG. **2****,** according to an embodiment of the present invention. The roller **104** includes a plurality of fins **142** and an elongated tubular member **144.** The shaft **110** is disposed through a hole **146** of the elongated tubular member **144** of the roller **104** for coupling the roller **104** with the pair of wheels **108.** In alternative embodiments, the roller **104** may be connected to the pair of wheels **108** using any other means know in the art, such as, but not limited to geared connection, splined connection and so on. The roller **104** and the pair of wheels **108** form a unitary assembly by an arrangement of the shaft **110** with the roller **104** and the pair of wheels **108.** In an example, a rotation of the pair of wheels **108** on the surface **106** while moving of the spreader assembly **100** drives the roller **104** to rotate in a direction of rotation of the pair of wheels **108.** In particular, the rotation of the roller **104** rotates the elongated tubular member **144,** and thus the plurality of fins **142** may be rotated for transferring the material from the hopper **102** to a passage **148.**

Specifically, an inner surface **150** of the hopper **102** and free ends **152** of each fin of the plurality of fins **142** define the passage **148.** The passage **148** extends up to the feed opening **130.** The feed opening **130** allows transfer of the material from the hopper **102** through the passage **148** to the surface **106.** The passage **148** defined between the inner surface **150** of the hopper **102** and the free ends **152** of each fin of the plurality of fins **142** has a predefined distance "**D1**".

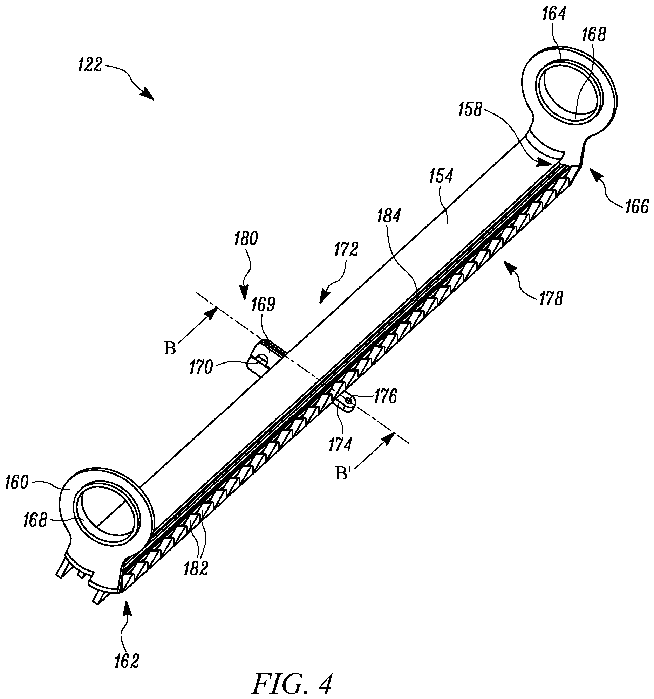

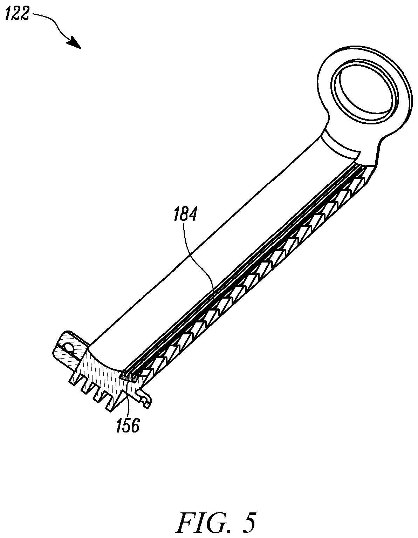

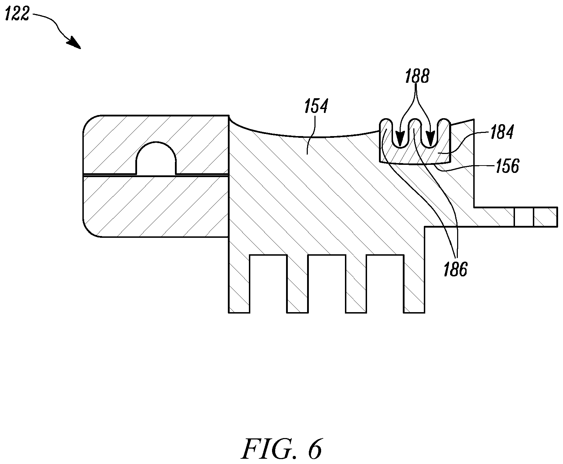

FIG. **4** illustrates a perspective view of the shutter assembly **122** shown in FIGS. **2** and **3****,** according to an embodiment of the present invention. The shutter assembly **122** includes a body portion **154** having at least one longitudinal recess **156** (shown in FIGS. **5** and **6**) along an axis of the body portion **154.** The longitudinal recess **156** is an elongated groove provided on the body portion **154** at a top end **158** facing the outer surface **140** of the bottom surface **126** of the hopper **102.** The longitudinal groove can be formed on the body portion **154** using a process, including, but not limited to, milling, machining, and casting or molding. In alternative embodiments, the body portion **154** may include multiple longitudinal recesses, such as the longitudinal recess **156** along the axis of the body portion **154.** The body portion **154** of the shutter assembly **122** further includes a first hinge **160** at a first end **162** and a second hinge **164** at a second end **166** distal to the first end **162.** Each of the first hinge **160** and the second hinge **164** include a circular profile **168** for connecting with the bottom surface **126** of the hopper **102.** The first hinge **160** and the second hinge **164** can be in an arcuate shape for facilitating movement of the shutter assembly **122** along the outer surface **140** of the bottom surface **126** of the hopper **102.** In an example, the first hinge **160** and the second hinge **164** can be removably connected to the first end **162** and the second end **166.** In another example, the first hinge **160** and the second hinge **164** can be integral parts of the body portion **154** of the shutter assembly **122.** In an example, each of the first hinge **160** and the second hinge **164** may include a bearing (not shown).

The body portion **154** further includes a first flange portion **169** having a first through hole **170** for connecting with the control cable **124** at a rear end **172.** The body portion **154** furthermore includes a second flange portion **174** having a second through hole **176** for connecting the body portion **154** of the shutter assembly **122** with the coil spring **136** at the front end **178** of the shutter assembly **122.** In alternative embodiments, the coil spring **136** may be provided at the rear end **172** of the shutter assembly **122.** The coil spring **136** may be adapted to apply a resilient force against a movement of the shutter assembly **122.** In the illustrated embodiment, the first flange portion **169** and the second flange portion **174** are arranged at a middle portion **180** of the shutter assembly **122.** It is to be understood that the first flange portion **169** and the second flange portion **174** may be provided at any distance along the length of the body portion **154** of the shutter assembly **122** and is not meant to be limiting the scope of the present invention. The shutter assembly **122** further includes a plurality of ribs **182** arranged between the second flange portion **174** and the longitudinal recess **156.** The plurality of ribs **182** may be configured to rigid members. The shutter assembly **122** further includes a resilient member **184** disposed at the longitudinal recess **156** of the body portion **154.** In an alternative embodiment, the shutter assembly **122** may include multiple resilient members (not shown), such as the resilient member **184,,** disposed at multiple longitudinal recesses of the body portion **154.**

FIG. **5** illustrates a sectional view of the shutter assembly **122** along an axis **B-B'** shown in FIG. **4** according to an embodiment of the present invention. The resilient member **184** of the shutter assembly **122** is arranged at the longitudinal recess **156** of the shutter assembly **122.** In an example, the resilient member **184** is fixedly arranged at the longitudinal recess **156** using a suitable method. The resilient member **184** may be fixed at the longitudinal recess **156** using a suitable means including, but not limited to, adhesive. In an example, the shutter assembly **122** is manufactured by a multi-component molding process. In an example, the multi-component molding process may include two component molding process.

FIG. **6** illustrates a side view of the shutter assembly **122** shown in FIG. **5****,** according to an embodiment of the present invention. The resilient member **184** is fixedly connected at the longitudinal recess **156** of the body portion **154.** The resilient member **184** includes one or more fins **186** composed of a resilient material. The fins **186** are adapted to be in a circular ends and forms grooves **188** between any two adjacent fins. In the illustrated embodiment, the grooves **188** are in a "U" shape. However, the fins **186** may include the grooves **188** in other shape like, "V".

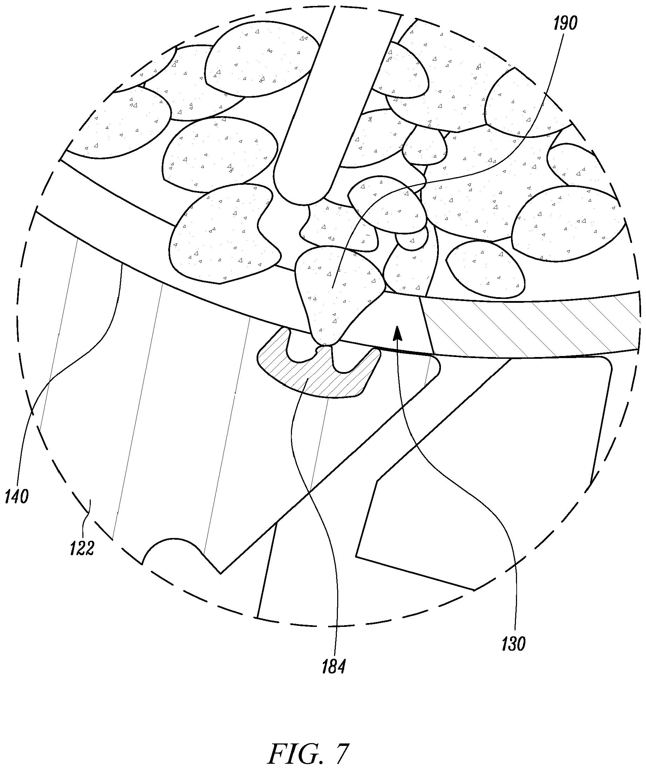

FIG. **7** illustrates a magnified view of a portion of the spreader assembly **100** and the shutter assembly **122,** in a first position of the shutter assembly **122.** The shutter assembly 122 is adapted to close the feed opening **130** in the first position. When the feed opening **130** is to be closed for example, during filling of the material in the hopper **102,** the shutter assembly **122** is in the first position. In order to bring the shutter assembly **122** to the first position, the operator operates the stopper actuating mechanism **120.** The control cable **124** connected to the stopper actuating mechanism **120** is released and the coil spring **136** connected to the shutter assembly **122** pulls the shutter assembly **122.** Due to such pulling of the shutter assembly **122,** the resilient member **184,** along with the shutter assembly **122,** selectively slides on the hopper **102** for closing the feed opening **130** and thus, locating the shutter assembly **122** at the first position thereof. The bottom surface **126** of the hopper **102** may be provided with a stopper (not shown) for restraining further movement of the shutter assembly **122** on the outer surface **140** of the bottom surface **126.**

Further, in order to move the shutter assembly **122** to the first position, the operator operates the shutter assembly **122** for closing, and if a particle(s) **190** of the material passing through the feed opening **130** is stuck, then the shutter assembly **122** having the resilient member **184** overrides the particle **190** stuck at the feed opening **130** and thus closes the feed opening **130.**

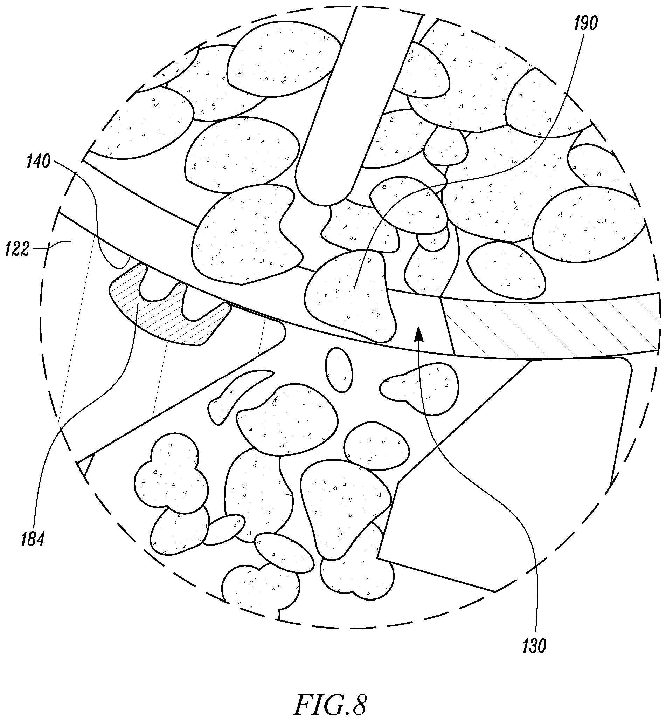

FIG. **8** illustrates a magnified view of a portion of the spreader assembly **100** and the shutter assembly **122,** in a second position of the shutter assembly **122.** The feed opening **130** of the hopper **102** is opened for allowing the particles **190** of the material from the hopper **102** to the surface **106.** During utilizing the spreader assembly **100,** the shutter assembly **122** may be moved from the first position to the second position. At the second position, the shutter assembly **122** is moved by actuating the stopper actuating mechanism **120** for pulling the control cable **124.** When it is desired to allow flow of the particles **190** of the material through the feed opening **130,** the shutter assembly **122** is positioned at the second position, for example, during spreading and distributing of the material from the hopper **102** to the surface **106.** Therefore, the resilient member **184** of the shutter assembly **122** eliminates chances of material or particles **190** getting stuck between the shutter assembly **122** and the hopper **102.** Further, since the resilient member **184** of the shutter assembly **122** comes in contact with the of material or particles **190,** and the resilient member **184** includes one or more fins **186** composed of a resilient material, any likelihood of damage thereto from the shutter assembly **122** is reduced. The shutter assembly **122** disclosed in the present invention is free from trickling effect after closing the feed opening **130** of the hopper **102** of the spreader assembly **100.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF REFERENCE NUMERALS

- 100: Spreader assembly
- 102: Hopper
- 104: Roller
- 106: Surface
- 108: Pair of wheels
- 110: Shaft
- 112: First side surface
- 114: Second side surface
- 116: Handle
- 118: Holding portion
- 120: Stopper actuating mechanism
- 122: Shutter assembly
- 124: Control cable
- 126: Bottom surface
- 128: Open top surface
- 130: Feed opening
- 132: First end
- 134: Second end
- 136: Coil spring
- 138: First end
- 140: Outer surface
- 142: Plurality of fins
- 144: Elongated tubular member
- 146: Hole
- 148: Passage
- 150: Inner surface
- 152: Free ends
- 154: Body portion
- 156: Longitudinal recess
- 158: Top end
- 160: First hinge
- 162: First end
- 164: Second hinge
- 166: Second end
- 168: Circular profile
- 169: First flange portion
- 170: First through hole
- 172: Rear end
- 174: Second flange portion
- 176: Second through hole
- 178: Front end
- 180: Middle portion
- 182: Plurality of ribs
- 184: Resilient member
- 186: Fins
- 188: Grooves
- 190: Particle
- A-A': Axis
- B-B': Axis
- X-X': Axis
- D1: Distance

## Claims

1. A lawn or farm land shutter assembly **(122)** for a spreader assembly comprising: a hopper (102) adapted to contain a material, the hopper including a feed opening (130) for selectively discharging the material, a pair of wheels (108) connected to the hopper (102); a roller (104) rotatably connected to the pair of wheels (108); the shutter assembly (122) being movably disposed on the hopper, the shutter assembly comprising:
a body portion (**154**) having at least one longitudinal recess (**156**), and a resilient member (**184**) disposed at the longitudinal recess (**156**) of the body portion (**154**), the resilient member (**184**) adapted to selectively slide on the hopper (**102**) to close the feed opening (**130**),
**characterized in that** the resilient member (**184**) includes multiple fins (**186**) composed of a resilient material,
whereas the multiple fins (**186**) define a plurality of grooves **188** in one of a "V" shape and a "U" shape.

2. The lawn or farm land shutter assembly (**122**) of claim 1, wherein the resilient member (**184**) is fixedly connected at the longitudinal recess (**156**) of the body portion (**154**).

3. The lawn or farm land shutter assembly (**122**) of claim 1, wherein the shutter assembly (**122**) is manufactured by a multi-component molding process.

4. The lawn or farm land shutter assembly (**122**) of claim 3, wherein the shutter assembly (**122**) is manufactured by two component molding process.

5. A lawn or farm land spreader assembly (**100**) comprising a lawn or farm land shutter assembly (**122**) according to any of claims 1 to 4, further comprising
a hopper (**102**) adapted to contain a material, the hopper (**102**) includes a feed opening (**130**) for selectively discharging the material;
a pair of wheels (**108**) connected to the hopper (**102**);
a roller (**104**) rotatably connected to the pair of wheels (**108**);
with the shutter assembly (**122**) movably disposed on the hopper (**102**);

6. The lawn or farm land spreader assembly (**100**) of claim 5 further comprising:
a handle (**116**) extending upwardly from the hopper (**102**); and
a stopper actuating mechanism (**120**) disposed on the handle (**116**) and in connection with the shutter assembly (**122**), wherein the stopper actuating mechanism (**120**) is adapted to selectively move the shutter assembly (**122**) on the hopper (**102**).

## Patentansprüche

1. Verschlussanordnung (122) für Rasen oder Ackerland für eine Verteileranordnung, umfassend:
einen Aufnahmebehälter (102) zur Aufnahme von Material, wobei der Aufnahmebehälter eine Abgabeöffnung (130) zur gezielten Abgabe des Materials umfasst, ein Paar mit dem Aufnahmebehälter verbundene Räder (108); einen Rollenkörper (104), der drehbar mit dem Räderpaar (108) verbunden ist, wobei die Verschlussanordnung beweglich auf dem Aufnahmebehälter angeordnet ist, wobei die Verschlussanordnung umfasst:
einen Körperabschnitt (154) mit mindestens einer Längsausnehmung (156), und einem elastisches Element (184), das an der Längsausnehmung (156) des Körperabschnitts (154) angeordnet ist, wobei das elastische Element (184) ausgelegt ist, um gezielt auf dem Aufnahmebehälter (102) verschoben zu werden, um die Abgabeöffnung (130) zu schließen,
**dadurch gekennzeichnet, dass**
das elastische Element (184) mehrere Rippen (186) umfasst, die aus einem elastischen Material bestehen,
wobei die mehreren Rippen (186) eine Vielzahl von Rillen 188 definieren, welche eine "V"- oder eine "U"-Form aufweisen.

2. Verschlussanordnung (122) für Rasen oder Ackerland nach Anspruch 1, wobei das elastische Element (184) an der Längsausnehmung (156) des Körperabschnitts (154) fest angebracht ist.

3. Verschlussanordnung (122) für Rasen oder Ackerland nach Anspruch 1, wobei die Verschlussanordnung (122) durch ein Mehrkomponenten-Formverfahren hergestellt ist.

4. Verschlussanordnung (122) für Rasen oder Ackerland nach Anspruch 3, wobei die Verschlussanordnung (122) durch ein Zweikomponenten-Formverfahren hergestellt ist.

5. Verteileranordnung (100) für Rasen- oder Ackerland umfassend eine Verschlussanordnung (122) für Rasen oder Ackerland nach einem der Ansprüche 1 bis 4,
ferner umfassend
einen Aufnahmebehälter (102) zur Aufnahme eines Materials, wobei der Aufnahmebehälter (102) eine Abgabeöffnung (130) zur gezielten Abgabe des Materials umfasst;
ein mit dem Aufnahmebehälter verbundenes Räderpaar (108);
einen Rollenkörper (104), der drehbar mit dem Räderpaar (108) verbunden ist; wobei die Verschlussanordnung (122) beweglich auf dem Aufnahmebehälter (102) angeordnet ist.

6. Verteileranordnung (100) für Rasen- oder Ackerland nach Anspruch 5, ferner umfassend:
einen Griff (116), der sich vom Aufnahmebehälter (102) nach oben erstreckt; und
einen Stopper-Betätigungsmechanismus (120), der an dem Griff (116) angeordnet ist und in Verbindung mit der Verschlussanordnung (122) steht, wobei der Stopper-Betätigungsmechanismus (120) dazu ausgelegt ist, die Verschlussanordnung (122) auf dem Aufnahmebehälter (102) gezielt zu bewegen.

## Revendications

1. Ensemble obturateur de gazon ou terre agricole (**122**) pour un ensemble épandeur comprenant : une trémie (102) adaptée pour contenir un matériau, la trémie incluant une ouverture d'alimentation (130) pour évacuer sélectivement le matériau, une paire de roues (108) reliées à la trémie (102) ; un rouleau (104) relié de manière rotative à la paire de roues (108) ; l'ensemble obturateur (122) étant disposé de manière mobile sur la trémie, l'ensemble obturateur comprenant :
une partie de corps (**154**) ayant au moins un évidement longitudinal (**156**), et un élément résilient (**184**) disposé en correspondance de l'évidement longitudinal (**156**) de la partie de corps (**154**), l'élément résilient (**184**) adapté pour coulisser sélectivement sur la trémie (**102**) afin de fermer l'ouverture d'alimentation (**130**),
**caractérisé en ce que**
l'élément résilient (**184**) inclut de multiples ailettes (**186**) constituées d'un matériau résilient,
tandis que les multiples ailettes (**186**) définissent une pluralité de rainures **188** dans une des formes en « V » et en « U ».

2. Ensemble obturateur de gazon ou terre agricole (**122**) selon la revendication 1, dans lequel l'élément résilient (**184**) est relié de manière fixe en correspondance de l'évidement longitudinal (**156**) de la partie de corps (**154**).

3. Ensemble obturateur de gazon ou terre agricole (**122**) selon la revendication 1, dans lequel l'ensemble obturateur (**122**) est fabriqué par un procédé de moulage de plusieurs composants.

4. Ensemble obturateur de gazon ou terre agricole (**122**) selon la revendication 3, dans lequel l'ensemble obturateur (**122**) est fabriqué par un procédé de moulage de deux composants.

5. Ensemble épandeur de gazon ou terre agricole (**100**) comprenant un ensemble obturateur de gazon ou terre agricole (**122**) selon l'une quelconque des revendications 1 à 4, comprenant en outre
une trémie (**102**) adaptée pour contenir un matériau, la trémie (**102**) inclut une ouverture d'alimentation (**130**) pour évacuer sélectivement le matériau :
une paire de roues (**108**) reliées à la trémie (**102**) ;
un rouleau (**104**) relié de manière rotative à la paire de roues (**108**) ;
avec l'ensemble obturateur (**122**) disposé de manière mobile sur la trémie (**102**).

6. Ensemble épandeur de gazon ou terre agricole (**100**) selon la revendication 5 comprenant en outre :
une poignée (**116**) s'étendant vers le haut de la trémie (**102**) ; et
un mécanisme de déclenchement du stoppeur (**120**) disposé sur la poignée (**116**) et en connexion avec l'ensemble obturateur (**122**), dans lequel le mécanisme de déclenchement du stoppeur (**120**) est adapté pour déplacer sélectivement l'ensemble obturateur (**122**) sur la trémie (**102**).
